# FASCICULE DE BREVET EUROPEEN

(11) **EP 3 914 049 B1**
(45) Date de publication et mention de la délivrance du brevet: **07.05.2025**
(21) Numéro de dépôt: 21174395.0
(22) Date de dépôt: 18.05.2021
(51) Int. Cl.: H05B 47/115, H05B 47/19, G06N 3/08, G06N 5/01, G06N 20/20

(54) **PROCÉDÉ DE CONTRÔLE D'UN ÉCLAIRAGE PUBLIC**
VERFAHREN ZUR KONTROLLE EINER ÖFFENTLICHEN BELEUCHTUNG
METHOD FOR CONTROLLING PUBLIC LIGHTING

(30) Priorité: 19.05.2020 FR 2005001
(43) Date de publication de la demande: 24.11.2021
(73) Titulaire: NRGYBOX, 33700 Merignac (FR)
(72) Inventeur: KUPISZ, Rémi, 33700 MERIGNAC (FR); BERGERAS, Alban, 16100 COGNAC (FR)
(74) Mandataire: Aquinov

(56) Documents cités:
- WO-A1-2018/091315
- WO-A1-2018/225862
- FR-A1- 3 081 646
- US-A1- 2019 215 934
- ANONYMOUS: "Apprentissage automatique - Wikipédia", 5 February 2020 (2020-02-05), XP093062980, Retrieved from the Internet <URL:https%3A%2F%2Ffr.wikipedia.org%2Fw%2Findex.php%3Ftitle%3DApprentissage_automatique%26oldid%3D167085298> [retrieved on 20230711]

## Description

L'invention concerne le domaine de l'éclairage public. Plus précisément, l'invention concerne un procédé de contrôle d'un éclairage public.

De façon classique, l'éclairage public, et notamment urbain, d'une zone géographique donnée est allumé de façon automatique entre un instant de début de service et un instant de fin de service, lesquels sont généralement déterminés en fonction des heures locales de coucher et de lever du soleil. Ce type de contrôle automatique n'est pas satisfaisant d'un pont de vue écologique et économique, dans la mesure où l'éclairage public reste alors allumé pendant des périodes de la nuit durant lesquels il n'y a aucun besoin d'éclairage.

Afin de répondre à des politiques d'éclairage public imposant des contraintes écologiques ou économiques, il a été ainsi imaginé d'éteindre l'éclairage public pendant certaines périodes prédéfinies de la nuit. Pour autant, cette solution n'est pas non plus satisfaisante car elle ne prend pas en compte les besoins des personnes résidant ou se déplaçant dans la zone géographique. Ainsi, en cas de changement des habitudes des résidents, notamment vis-à-vis des saisons, ou encore en cas d'événements particulier impliquant un changement de flux de population au travers de la zone, l'extinction de l'éclairage public peut ainsi devenir inadaptée aux besoins des usagers. De même, le besoin en éclairage peut être différent selon le nombre de personnes se déplaçant dans la zone. Par exemple, il peut être nécessaire d'éclairer sensiblement une rue lorsque seulement quelques personnes se déplacent la nuit dans cette rue, afin de générer un sentiment de sécurité, tandis qu'un éclairage faible peut suffire lorsqu'un nombre conséquent de personnes traverse cette rue, la sensation de foule diminuant le sentiment d'insécurité.

Afin de pouvoir contrôler l'éclairage public de façon plus adapté, il a également été imaginé des éclairages publics dits intelligents, dans lesquels les luminaires, candélabres et autres sources de lumière de l'éclairage public sont équipés de capteurs de présence permettant l'émission automatique de lumière lorsqu'une personne est détectée. Si ce type d'éclairage permet effectivement de moduler l'éclairage en fonction de la présence de personnes, il présente plusieurs inconvénients. D'une part, dans ce type de solution, l'éclairage est activé dès que le capteur détecte la présence d'une personne, ce qui ne répond pas ainsi au besoin d'adaptation de l'éclairage au nombre de personnes traversant la zone géographique. D'autre part, ce type d'éclairage requiert un équipement spécifique et couteux pour chaque source de lumière. Enfin, ce type d'éclairage ne permet pas de répondre à une politique contraignante en termes d'économie ou d'écologie, dans la mesure où il n'est pas possible de moduler, au niveau d'une zone donnée, la consommation électrique globale de l'éclairage public de cette zone. FR 3 081 646 A1 décrit un procédé permettant de désactiver des éclairages publiques pendant des plages horaires prédéterminées pendant lesquelles il est peu probable qu'ils soient utiles.

WO 2018/091315 A1 décrit un système d'amélioration de l'expérience des clients circulant dans une zone commerciale, dans lequel des données de télécommunication permettent de déterminer, au moyen d'algorithmes d'apprentissage automatique, des motifs de déplacement.

Dans ce contexte, il existe ainsi un besoin pour un procédé de contrôle d'un éclairage public d'une zone géographique donnée, permettant d'adapter l'éclairage notamment aux besoins des usagers, et notamment aux changements dynamiques des habitudes de déplacement des usagers, qui soit universel pour tous les types de sources de lumière de cet éclairage public et ne requiert pas d'équipement spécifique et couteux. La présente invention se place dans ce contexte et vise à répondre à ce besoin.

A ces fins, l'invention a pour objet un procédé de contrôle d'un éclairage public dans une zone géographique prédéterminée, le procédé comportant les étapes suivantes :
a. Fourniture d'un jeu de données relatif à la présence de personnes dans une zone géographique d'estimation, obtenues à partir de terminaux mobiles de ces personnes ;
b. Détermination d'au moins un modèle de flux de population dans ladite zone géographique prédéterminée à partir dudit jeu de données ;
c. Définition d'une loi de commande de l'éclairage public de ladite zone géographique en fonction dudit modèle de flux de population et application de ladite loi de commande à cet éclairage public.

Selon l'invention, la zone géographique d'estimation peut correspondre à la zone géographique prédéterminée ou, en variante, recouvrir tout ou partie de la zone géographique prédéterminée. En variante encore, la zone d'estimation peut être une zone différente de la zone géographique prédéterminée, et de même catégorie que la zone géographique prédéterminée. On entend par zones géographiques de même catégorie des zones géographiques présentant au moins une caractéristique intrinsèque identique, par exemple la présence d'un centre commercial, d'un stade, d'une zone résidentielle. Le modèle de flux de population peut ainsi être déterminé directement pour la zone géographique concernée ou peut être déterminé pour une zone géographique de même catégorie et transposé à la zone géographique prédéterminée.

Selon l'invention, le jeu de données fourni peut comporter une pluralité d'indicateurs relatifs à la présence et/ou à la mobilité de personnes dans la zone géographique d'estimation au cours du temps dans un intervalle de temps global donné. Le cas échéant, le modèle de flux de population pourra comporter une ou plusieurs valeurs représentatives de la corrélation, linéaire ou non, de ces indicateurs entre eux. Le modèle de flux de population est ainsi une représentation des habitudes de déplacement de la population au sein de la zone.

On comprend ainsi que grâce à l'invention, on vient ainsi modéliser, à partir d'un jeu de données reflétant la position des usagers au cours du temps dans une zone d'estimation, le flux de population dans la zone géographique prédéterminée. Ce modèle est ensuite exploité pour définir une loi de commande de l'éclairage public qui soit notamment adaptée aux habitudes de déplacement de la population dans cette zone géographique prédéterminée tout en respectant des contraintes imposées par une politique économique et/ou écologique de la zone géographique prédéterminée. On comprend en outre que l'éclairage public peut être contrôlé de façon simple, sans nécessiter d'équiper chaque source de lumière d'un capteur de présence.

Dans un mode de réalisation de l'invention, le jeu de données fourni comporte une estimation du nombre de personnes entrant, présentes et sortant dans la zone d'estimation pendant une pluralité d'intervalles de temps élémentaires d'un intervalle de temps global donné. On pourra prévoir, de façon cumulative ou alternative, d'autres indicateurs relatifs à la présence de personnes dans la zone d'estimation, et notamment une estimation de l'évolution de la densité de population au sein de la zone d'estimation au cours du temps, une estimation de l'évolution du nombre de résidents de la zone d'estimation présents dans la zone d'estimation au cours du temps, une estimation de l'évolution du temps de présence des personnes présentes dans la zone d'estimation au cours du temps, ou tout autre indicateur représentatif de la mobilité des personnes dans la zone d'estimation au cours du temps.

Par exemple, ladite estimation du nombre de personnes entrant, présentes et sortant de la zone d'estimation peut être obtenue à partir d'informations relatives à la position au cours du temps d'une pluralité de terminaux mobiles, ces informations étant déterminées à partir de données générées par des antennes relais d'un réseau de téléphonie mobile situées dans la zone d'estimation, à laquelle ou auxquelles ces terminaux mobiles se sont connectés à un instant donné. En effet, pour chaque intervalle de temps élémentaire, il est possible de déterminer la position de chacun des terminaux mobiles de ladite pluralité de terminaux mobiles, par exemple par triangulation. Chaque terminal mobile se connectant régulièrement, pendant un même intervalle de temps élémentaires, à au moins deux ou trois antennes relais qui lui sont proches, il est possible de déterminer la distance de ce terminal, par exemple par mesure du temps de vol, à chacune de ces antennes relais et d'estimer ainsi, par triangulation, la position de ce terminal mobile pendant cet intervalle de temps élémentaires. Selon l'invention, il est ainsi possible de déterminer, à partir de ces distances, si un terminal mobile est entré ou est sorti de la zone d'estimation.

De façon alternative ou cumulative, le jeu de données fourni pourra comporter des informations relatives à la mobilité de personnes dans la zone d'estimation au cours du temps, obtenues à partir de données de géolocalisation fournies directement par les terminaux mobiles de ces personnes, par exemple récoltées et agrégées au moyen d'une ou plusieurs applications logicielles installées sur ces terminaux mobiles.

Selon l'invention, l'étape de détermination du modèle comporte une sous-étape de génération d'une pluralité de modèles de flux de population dans ladite zone géographique prédéterminée, dits modèles de test, chaque modèle de test étant généré par un algorithme d'apprentissage automatique distinct à partir dudit jeu de données, chaque modèle de test étant associé à une métrique d'évaluation, et une sous-étape de sélection d'un modèle de flux de population parmi la pluralité de modèles de test en fonction des métriques d'évaluation de ladite pluralité de modèles de test. Le cas échéant, le modèle déterminé à l'issue de l'étape de détermination est le modèle de test sélectionné.

Avantageusement, le jeu de données comportant une pluralité d'indicateurs relatif à la présence et/ou à la mobilité de personnes dans la zone géographique d'estimation au cours du temps dans un intervalle de temps global donné, chaque algorithme d'apprentissage automatique détermine, dans la sous-étape de génération, des coefficients de régression ou de corrélation entre deux ou plusieurs de ces indicateurs entre eux, selon une méthode mathématique donnée et un ou plusieurs hyperparamètres donnés, l'ensemble des coefficients formant ledit modèle de test. Par exemple, les algorithmes d'apprentissage automatique distincts pourront être des algorithmes mettant en œuvre des méthodes mathématiques distinctes et/ou des algorithmes mettant en œuvre une même méthode mathématique avec un ou plusieurs hyperparamètres distincts. A titre d'exemple, on pourra employer des algorithmes de type régresseur, supervisé ou non, et notamment des algorithmes de type : arbres de décision, forêt aléatoire, régression linéaire simple, régression linéaire multiple, régression logistique, méthode des k plus proches voisines (également appelée KNN de l'anglais » K-nearest neighbors »), partitionnement de données, notamment en K-moyenne, réseau de neurones.

Avantageusement, la sous-étape de génération comporte une étape de séparation du jeu de données fourni en un jeu dit d'entrainement et un jeu dit d'évaluation, chaque modèle de test étant généré à partir dudit jeu d'entrainement et une étape d'évaluation de chaque modèle de test, dans laquelle la métrique d'évaluation est déterminée par comparaison de données prédites par le modèle de test et le jeu d'évaluation. On pourra prévoir une séparation simple ou une séparation de type validation croisée. A titre d'exemple, on pourra déterminer, pour chaque modèle de test, une métrique d'évaluation d'un des types suivants : matrice de confusion, aire sous la courbe ROC (de l'anglais Receiver Operating Characteristic), racine de l'erreur quadratique moyenne (également appelée RMSE de l'anglais Root Mean Square Error), erreur carrée relative, coefficient de détermination. Le cas échéant, l'étape de sélection d'un modèle de flux de population parmi la pluralité de modèles de test pourra par exemple consister en la sélection du modèle de test présentant la plus grande aire sous la courbe ROC.

Selon un mode de réalisation de l'invention, le procédé peut comporter une étape de fourniture d'au moins un jeu supplémentaire de données contextuelles relatives à ladite zone géographique prédéterminée. Le cas échéant, le modèle de flux de population dans ladite zone géographique prédéterminée est déterminé à partir dudit jeu de données et du jeu supplémentaire de données. Il pourra par exemple s'agit de données relatives à un événement dans la zone géographique prédéterminée, de données météorologiques dans la zone géographique prédéterminée et/ou de données dites de comptage dans la zone géographique prédéterminée, par exemple correspondant à un comptage du nombre de personnes traversant une ou plusieurs rues, ou une sous-zone de la zone géographique prédéterminée au cours du temps, notamment obtenue au moyen d'une ou plusieurs boucles d'induction magnétique installées dans cette ou ces rues ou cette sous-zone. On vient ainsi enrichir le jeu de données fourni de données provenant d'autres sources de sorte à obtenir un modèle de flux de population permettant une prédiction fiable dans la zone géographique prédéterminée.

Selon un mode de réalisation de l'invention, le procédé comporte une étape de classification des données du jeu de données parmi des catégories de données chacune associée à une sous-zone géographique. Le cas échéant, l'étape de détermination du modèle comporte, pour chaque sous-zone géographique, une sous-étape de détermination d'un sous-modèle de flux de population dans cette sous-zone géographique à partir des données classifiées dans la catégorie de données associée à cette sous-zone géographique. De façon avantageuse, le procédé pourra comporter une étape de fourniture d'un ou plusieurs jeux supplémentaires de données relatifs à la présence de personnes dans une autre ou plusieurs autres zones géographiques d'estimation, obtenues à partir de terminaux mobiles de ces personnes. Avantageusement, l'étape de classification pourra être réalisée à partir d'un ou plusieurs algorithmes de classification automatique basé(s) sur un apprentissage automatique, supervisé ou non supervisé. Il est ainsi possible de catégoriser les données à l'aide de sous-zones, prédéterminées ou non, par exemple pour déterminer des catégories de zones, dans chacune desquelles le procédé selon l'invention va ainsi définir un sous-modèle de flux de population, lequel pourra alors être exploité pour définir une loi de commande de l'éclairage public d'une autre zone de même catégorie.

Selon un mode de réalisation de l'invention, le procédé comporte une étape de fourniture d'un jeu de données antérieur relatif à la présence de personnes dans la zone géographique d'estimation à un instant donné, une étape de prédiction d'un modèle du flux de population à un instant futur par rapport à l'instant donné à partir du modèle de flux de population déterminé lors de l'étape de détermination et du jeu de données antérieur, la loi de commande étant définie à partir du modèle de flux de population prédit. Par exemple, le modèle de flux de population à un instant futur pourra être prédit au moyen d'un algorithme d'apprentissage automatique, à partir dudit jeu de données antérieur et du modèle déterminé à l'issue de l'étape de détermination. Par exemple, de façon semblable à l'étape de détermination du modèle de flux de population, l'étape de prédiction du modèle de flux de population pourra consister en la sélection d'un modèle parmi une pluralité de modèles de test générés à l'aide d'une pluralité d'algorithmes d'apprentissage automatique à partir du modèle déterminé lors de l'étape de détermination et dudit jeu de données antérieur, le modèle étant sélectionné en fonction d'une métrique d'évaluation.

Si on le souhaite, le procédé peut comporter une étape de fourniture d'au moins une information relative à un état futur de ladite zone géographique prédéterminée audit instant futur, l'étape de prédiction d'un modèle du flux de population à un instant futur étant réalisée à partir du modèle de flux de population déterminé lors de l'étape de détermination, du jeu de données antérieur et de ladite information relative à l'état futur de ladite zone géographique prédéterminée. L'information relative à un état futur pour être une information relative à un événement à venir dans la zone géographique prédéterminée, une prédiction météorologique dans la zone géographique prédéterminée.

Avantageusement, le procédé peut comporter une étape de fourniture d'un jeu de données postérieur relatif à la présence de personnes dans la zone géographique d'estimation audit instant futur, cette étape étant réalisée à l'instant futur ou ultérieurement à cet instant futur, et une étape de correction dudit modèle de flux de population prédit à l'aide dudit jeu de données postérieur. Par exemple, de façon semblable à l'étape de détermination du modèle de flux de population, l'étape de prédiction du modèle de flux de population pourra consister en la sélection d'un modèle corrigé parmi une pluralité de modèles de test générés à l'aide d'une pluralité d'algorithmes d'apprentissage automatique à partir du modèle déterminé lors de l'étape de détermination et dudit jeu de données antérieur, le modèle corrigé étant celui qui minimise une erreur de prédiction, mesurée à partir d'une comparaison entre des données prédites par le modèle prédit et le jeu de données postérieur. On réalise ainsi un réapprentissage permettant d'adapter le modèle au changement d'habitudes de déplacement de la population.

Avantageusement, les étapes de fourniture d'un jeu de données antérieur, de prédiction d'un modèle de flux de population, de définition et d'application d'une loi de commande à l'éclairage public, de fourniture d'un jeu de données postérieur et de correction du modèle de flux de population prédit sont répétées de façon récurrente. Le cas échéant, le modèle de flux de population corrigé et le flux de données postérieur fourni lors d'une itération de ces étapes étant respectivement le modèle de flux de population fourni pour l'étape de prédiction et le jeu de données antérieur fourni lors de l'itération suivante de ces étapes.

Dans un mode de réalisation de l'invention, l'étape de définition d'une loi de commande de l'éclairage public de ladite zone géographique comporte la définition d'au moins une période d'extinction et/ou de diminution et/ou d'allumage et/ou d'augmentation de l'éclairage public en fonction dudit modèle de flux de population.

Par exemple, le procédé peut comporter une étape de détermination, à partir du modèle de flux de population déterminé ou prédit, d'au moins une première période dans laquelle le flux de population est inférieur à un premier seuil donné et/ou d'au moins une deuxième période dans laquelle le flux de population est supérieur à un deuxième seuil donné, dans lequel la loi de commande de l'éclairage public définit une consigne de quantité de flux lumineux à émettre pour chaque source de lumière de l'éclairage public dans la zone géographique prédéterminée, la loi de commande définissant une première consigne de flux lumineux pour les première et/ou deuxième période. On comprend ainsi qu'il est possible d'adapter l'éclairage public au nombre de personnes se déplaçant dans la zone géographique, par exemple en diminuant l'éclairage public lorsqu'il n'y a pas ou peu de personnes et/ou au contraire lorsqu'il y a beaucoup de personnes, le besoin en éclairage est alors faible voire inexistant.

Si on le souhaite, la première consigne de flux lumineux peut être identique pour toutes les sources de lumière de l'éclairage public dans la zone géographique prédéterminée ou, en variante, être propre à chaque source de lumière de l'éclairage public dans la zone géographique prédéterminée. Par exemple, dans le cas d'une source de lumière de type à incandescente ou de type à lampe à décharge, la loi de commande pourra consister en l'extinction de cette source lumineuse, la première consigne de flux lumineux étant alors nulle. Dans le cas d'une source de lumière de type diode électroluminescente, la première consigne de flux lumineux pourra être nulle ou en variante pourra être une valeur non nulle et sensiblement inférieure au flux lumineux nominal que cette source de lumière est susceptible d'émettre.

Avantageusement, le procédé comporte une étape de détermination, à partir du modèle de flux de population déterminé ou prédit, d'au moins une troisième période dans laquelle le flux de population est compris entre le premier seuil donné et le deuxième seuil donné, la loi de commande définissant une deuxième consigne de flux lumineux pour la troisième période. On comprend ainsi qu'il est possible d'adapter l'éclairage public au nombre de personnes se déplaçant dans la zone géographique, en allumant l'éclairage public lorsque le nombre de personnes le justifie, de sorte à créer notamment un sentiment de sécurité. Par exemple, dans le cas d'une source de lumière de type à incandescente ou de type à lampe à décharge, la loi de commande pourra consister en l'allumage de cette source lumineuse, la deuxième consigne de flux lumineux étant alors identique au flux lumineux nominal que cette source de lumière est susceptible d'émettre. Dans le cas d'une source de lumière de type diode électroluminescente, la deuxième consigne de flux lumineux pourra être sensiblement égale au flux lumineux nominal que cette source de lumière est susceptible d'émettre ou en variante être supérieure à la première consigne de flux lumineux.

Avantageusement, le procédé comporte une étape de fourniture d'une consigne de consommation d'énergie globale, et les périodes d'extinction, de diminution, d'allumage et/ou d'augmentation de l'éclairage public sont définies en fonction du modèle de flux de population et de sorte que la consommation d'énergie de l'éclairage public pendant la totalité de ces périodes soit conforme à ladite consigne.

Si on le souhaite, le procédé peut comporter une étape de fourniture d'une information relative à la luminosité ambiante de la zone géographique prédéterminée, les périodes d'extinction, de diminution, d'allumage et/ou d'augmentation de l'éclairage public étant définies en fonction du modèle de flux de population et de cette information de luminosité ambiante. L'information relative à la luminosité ambiante pourra par exemple être une information météorologique, une information relative à la durée de l'aube et/ou du crépuscule, une information sur la phase lunaire, une information relative à la présence d'installations lumineuses commerciales. On peut ainsi encore adapter l'éclairage public en fonction de la luminosité ambiante locale de la zone géographique prédéterminée.

La présente invention est maintenant décrite à l'aide d'exemples uniquement illustratifs et nullement limitatifs de la portée de l'invention, et à partir des illustrations jointes, dans lesquelles :
[Fig. 1] représente, schématiquement et partiellement, une vue d'un procédé de contrôle d'un éclairage public selon un mode de réalisation de l'invention ;
[Fig. 2] représente, schématiquement et partiellement, une vue de dessus d'une zone géographique disposant d'un éclairage public contrôlé selon le procédé de la [Fig. 1];
[Fig. 3] représente, schématiquement et partiellement, une pluralité d'indicateurs relatifs à la présence de personnes dans la zone de la [Fig. 2] ;
[Fig. 4] représente, schématiquement et partiellement, une étape de prédiction d'un modèle de flux de population dans la zone de la [Fig. 2], selon le procédé de la [Fig. 1];
[Fig. 5] représente, schématiquement et partiellement, une étape de définition d'une loi de commande de l'éclairage public de la zone de la [Fig. 2], selon le procédé de la [Fig. 1]; et
[Fig. 6] représente, schématiquement et partiellement, une étape de définition d'une autre loi de commande de l'éclairage public de la zone de la [Fig. 1].

Dans la description qui suit, les éléments identiques, par structure ou par fonction, apparaissant sur différentes figures conservent, sauf précision contraire, les mêmes références.

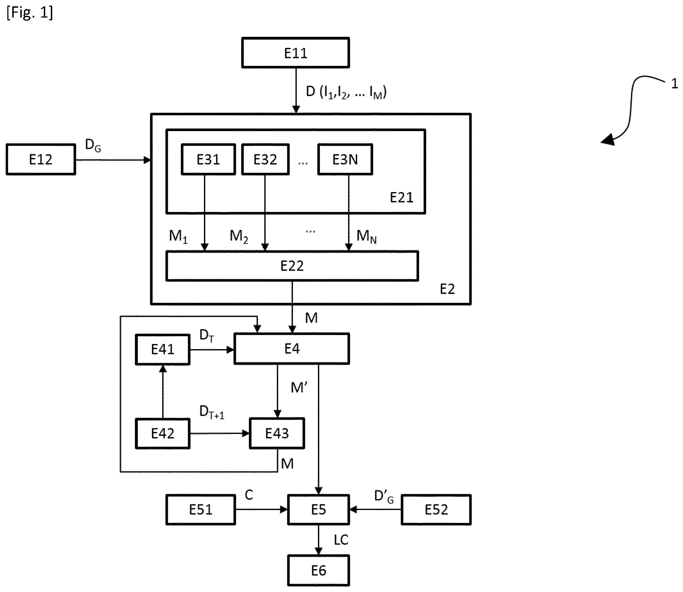

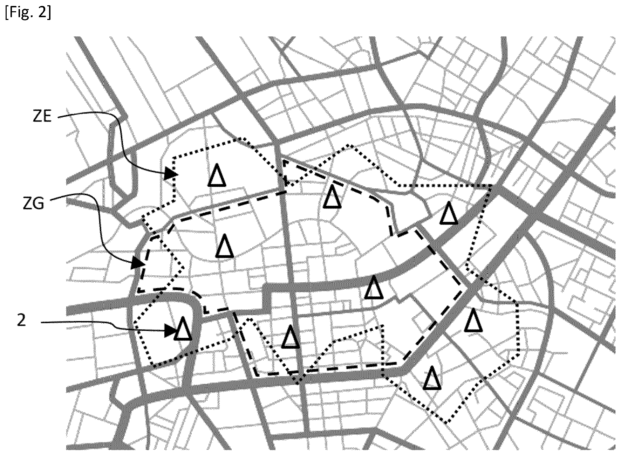

On a représenté en [Fig. 1] un procédé de contrôle 1 d'un éclairage public d'une zone géographique ZG, qui a été représentée en [Fig. 2].

La zone géographique ZG (représentée par des lignes en pointillés longs) est une zone résidentielle urbaine, quadrillée par un ensemble de rues munies de sources de lumière, par exemple des lampadaires, des candélabres, des réverbères, formant un éclairage public de cette zone ZG.

Une pluralité d'antennes relais 2 d'un réseau de téléphonie mobile sont réparties dans et autour de la zone géographique ZG en définissant une zone d'estimation ZE (représentée par des lignes en pointillés courts). La zone d'estimation ZE peut par exemple être définie par le pourtour d'un diagramme de Voronoï obtenu à partir des positions de ces antennes 2.

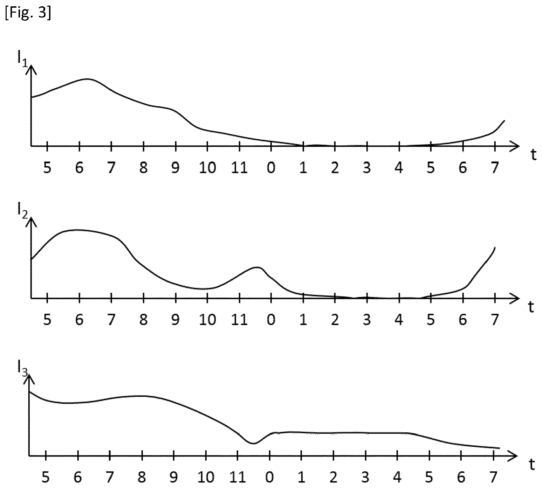

Lorsque le terminal mobile d'un utilisateur se trouve dans la zone d'estimation ZE, il se connecte, dans un intervalle de temps suffisamment court, à au moins trois antennes relais 2 qui lui sont proches. Il est ainsi possible d'estimer, par triangulation, sa position dans la zone ZE. Ces connexions aux antennes relais 2 s'effectuant de façon régulière, on peut ainsi suivre la position du terminal mobile au cours du temps. Les antennes relais 2 peuvent ainsi générer des données traduisant les mouvements des utilisateurs dans la zone d'estimation ZE. Par exemple, il est possible d'obtenir une série de données I1 indiquant le nombre d'utilisateurs entrant dans la zone ZE pendant un intervalle de temps élémentaire, par exemple toutes les 30 minutes, pendant un intervalle de temps global, par exemple une journée, en identifiant les nouveaux terminaux mobiles entrant dans la zone. On peut également obtenir une série de données 12 indiquant le nombre d'utilisateurs sortant de la zone ZE dans chaque intervalle de temps élémentaire de cet intervalle de temps global, et une série de données 13 indiquant le nombre d'utilisateurs présents dans la zone ZE dans chaque intervalle de temps élémentaires de cet intervalle de temps global. Ces séries de données I1, I2 et 13 ont été représentées en [Fig. 3]

Ces séries de données I1 à 13 sont ainsi agrégées en un jeu de données D, lequel est fourni, dans une première étape E11, en entrée procédé 1 selon l'invention.

Il est à relever que le nombre et les types d'indicateurs dans l'exemple décrit ne sont pas limitatifs, et que le jeu de données fourni à l'étape E11 peut comporter M séries de données I₁ à I_{M} de types différents, acquis ou non au moyen des antennes relais 2, chaque série de données I₁ à I_{M} étant un indicateur relatif à la présence et/ou à la mobilité de personnes dans la zone ZE au cours du temps.

Dans une étape E2, le procédé détermine, à partir du jeu de données D, un modèle M de flux de population dans la zone géographique ZG.

A ces fins, le jeu de données D est enrichi à l'aide d'un jeu de données supplémentaire D_{G}, fourni dans une étape E12. Le jeu D_{G} est un jeu de données contextuelles relatives à la zone géographique ZG, comprenant des informations relatives à des événements ayant eu lieu pendant l'intervalle de temps global dans la zone ZG, des données météorologiques dans la zone ZG au cours de l'intervalle de temps global, ainsi que des données de comptage de personnes se déplaçant dans la zone ZG au cours de l'intervalle de temps global, relevées in situ.

Le jeu de données enrichi D, D_{G} est séparé en un jeu d'entrainement et un jeu de validation. Dans une étape E21, une pluralité de modèles de flux de population de test M₁ à M_{N} est générée. Plus spécifiquement, l'étape E21 comporte une pluralité d'étapes E31 à E3N. Dans chaque étape E3i, un modèle de test Mᵢ est généré par un algorithme d'apprentissage automatique distinct à partir du jeu d'entrainement. Les algorithmes d'apprentissage automatique employés dans ces étapes E31 à E3N pourront mettre en œuvre des méthodes mathématiques distinctes et/ou une même méthode mathématique employant un ou plusieurs hyperparamètres distincts. Dans l'exemple décrit, chacun des modèles M₁ à M_{N} est un modèle du nombre de personnes se déplaçant dans la zone ZG au cours du temps, généré par un algorithme mettant en œuvre une méthode de type régression polynomiale multiple avec un jeu d'hyperparamètres distinct pour chaque étape E31 à E3N, à partir du jeu d'entrainement. Chaque modèle de flux de population est ainsi défini par un ensemble de coefficients de régression permettant de prédire mathématiquement le nombre de personnes se déplaçant dans la zone ZG au cours du temps à partir de nouvelles données.

Par ailleurs, dans chaque étape E3i, chaque modèle de test M₁ à M_{N} est évalué en confrontant des données prédites par ce modèle de test et les données du jeu de validation, et en déterminant ainsi une métrique d'évaluation, par exemple une racine de l'erreur quadratique moyenne.

Dans une étape E22, le modèle de flux de population M ayant la meilleure métrique parmi les modèles de test M1 à MN est sélectionné.

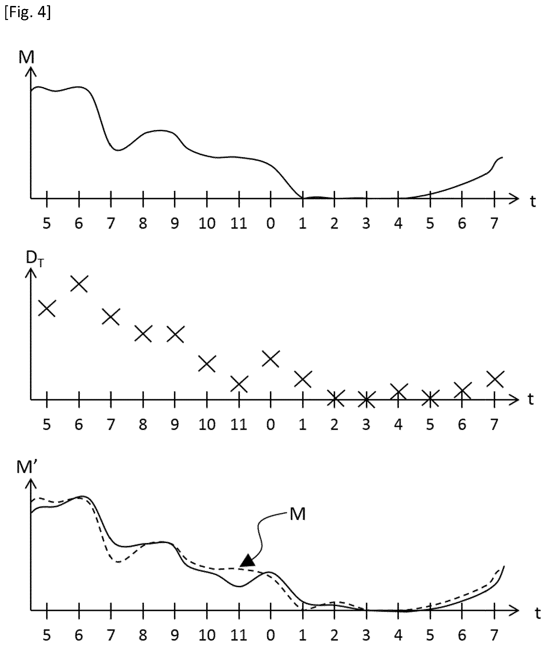

La [Fig. 4] représente, en haut, le modèle de flux de population M, par exemple représentant une estimation du nombre de personnes se déplaçant dans la zone géographique ZG au cours du temps. Dans une étape E4, un modèle de flux de population à un instant futur M' est prédit, à partir du modèle M. A cet effet, dans une étape E41, un jeu de données D_{T} dit antérieur, relatif à la présence de personnes dans la zone ZE pendant un intervalle de temps précédent l'instant futur, est fourni. Par exemple ce jeu de données antérieur D_{T} pourra être acquis de façon semblable au jeu de données D. On a représenté, dans le graphique du milieu de la [Fig. 4] un exemple de jeu de données antérieur D_{T}.

Un modèle M' est alors prédit, à l'étape E4, à l'aide du modèle M issu de l'étape E2 et du jeu de données antérieur D_{T}. Le graphique du bas de la [Fig. 4] représente un exemple de modèle M' prédit, le modèle M étant représenté en pointillé. On notera que l'étape de prédiction E4 peut être semblable à l'étape E2, en sélectionnant le modèle de meilleure métrique parmi une pluralité de modèles générés par des algorithmes d'apprentissage automatique distincts, à partir du modèle M et du jeu de données antérieur D_{T}.

Dans une étape E5, une loi de commande LC de l'éclairage public de la zone géographique ZG est définie, au moyen du modèle M' prédit à l'étape E4.

A cet effet, le procédé comporte une étape E51 de fourniture d'une consigne de consommation d'énergie globale C et une étape de réception d'informations D'_{G} relatives à la luminosité ambiante de la zone géographique ZG. Dans l'exemple décrit, il s'agit d'informations météorologiques et des heures de lever et de coucher du soleil, ainsi que des durées de l'aube et du crépuscule.

Dans l'exemple décrit, l'étape de définition de la loi de commande LC comporte une étape de définition de périodes T1 dans lesquelles le modèle M' est inférieur à un seuil donné A1 défini en fonction de la consigne de consommation C, par exemple 2 personnes, de périodes T2 dans lesquelles le modèle M' est supérieur à un seuil donné A2 supérieur au seuil A1 et défini en fonction de la consigne de consommation C, par exemple 30 personnes, et de périodes T3 dans lesquelles le modèle M' est compris entre le seuil A1 et le seuil A2.

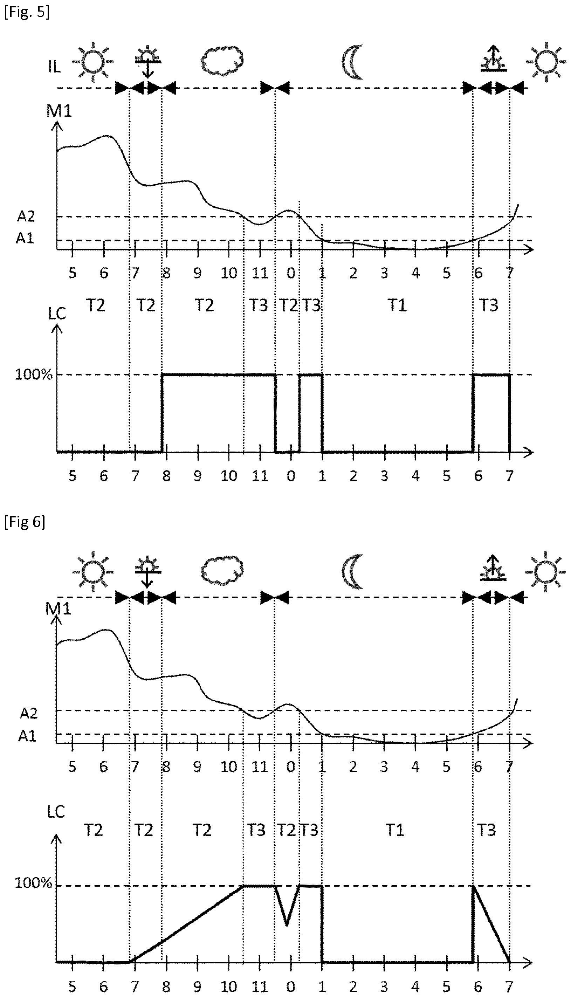

On a représenté en [Fig. 5] sur le graphique du haut le modèle prédit M', ces différentes périodes T1, T2, T3 ainsi que les informations D'_{G}.

Le graphique du bas de la [Fig. 5] représente une loi de commande LC définie, dans une étape E32, en fonction de ces périodes T1, T2 et T3 et de ces informations D'_{G}. Cette loi de commande LC définit une consigne de flux lumineux à émettre par chacune des sources de lumière de l'éclairage public de la zone géographique ZG.

Dans la première période T2, du fait de la lumière du soleil, il n'est pas nécessaire d'éclairer la zone géographique ZG, de sorte que la consigne de flux lumineux de l'éclairage public de la zone ZG est nulle. Dans la deuxième période T2, la luminosité décroit du fait du coucher du soleil. Toutefois, cette luminosité est toujours suffisante, et le nombre de personnes se déplaçant dans la zone géographique ZG selon le modèle M' ne requiert pas d'éclairage.

Dans la troisième période T2, on constate l'apparition de nuages venant diminuer la luminosité ambiante. Bien que le nombre de personnes se déplaçant dans la zone géographique ZG selon le modèle M' soit important, il reste nécessaire d'allumer l'éclairage public afin de répondre aux besoins de ces personnes. La prédiction météorologique étant fournie au procédé, la loi de commande LC définit ainsi une consigne de flux lumineux non nulle, correspondant par exemple à 100% du flux lumineux nominal que chaque source de lumière de l'éclairage public de la zone géographique ZG est susceptible d'émettre.

Dans la première période T3 succédant à la troisième période T2, les nuages impactent toujours la luminosité ambiante, tandis que le nombre de personnes se déplaçant dans la zone géographique ZG selon le modèle M' diminue. La commande LC maintient ainsi la consigne de flux lumineux à 100% du flux nominal.

Dans la quatrième période T2 succédant à la première période T3, les nuages ont disparu et la luminosité ambiante remonte. En outre, le nombre de personnes se déplaçant dans la zone géographique ZG selon le modèle M' remonte. Dans ces conditions, il est considéré qu'il n'est pas nécessaire d'éclairer la zone géographique ZG, le nombre de personnes étant suffisant en soi pour générer un sentiment de sécurité. La loi de commande LC définit ainsi une consigne de flux lumineux nulle.

Dans la deuxième période T3 succédant à la quatrième période T2, la situation est équivalente à la première période T3, de sorte que la loi de commande LC définit une consigne de flux lumineux à 100% du flux nominal.

Dans la première période T1 succédant à la deuxième période T1, le nombre de personnes se déplaçant dans la zone géographique ZG selon le modèle M' est particulièrement faible. Il n'y a ainsi aucun besoin d'éclairage public. La loi de commande LC définit ainsi une consigne de flux lumineux nulle.

Enfin, dans la troisième période T3 succédant à la première période T1, la situation est équivalente à la première période T3, de sorte que la loi de commande LC définit une consigne de flux lumineux à 100% du flux nominal.

Les différentes périodes d'allumage et d'extinction de l'éclairage public sont ainsi définies à l'étape E5 de sorte à respecter la consigne de consommation C.

Dans une étape E6, la loi de commande LC est alors transmise aux sources de lumière de l'éclairage public de la zone géographique ZG, qui l'appliquent pour respecter les valeurs de consignes que cette loi de commande LC définit.

Il est à relever que l'étape E4 de prédiction du modèle M' est répétée de façon récurrente. Afin de pouvoir adapter le modèle M aux changements d'habitudes de déplacement de la population, le procédé comporte une étape E42 de fourniture d'un jeu de données postérieur D_{T+1}, relatif à la présence de personnes dans la zone ZE pendant un intervalle de temps lors de l'instant futur, est fourni. Par exemple ce jeu de données postérieur D_{T+1} pourra être acquis de façon semblable au jeu de données D, lors de l'instant futur, et fourni lors de l'étape E42, pendant l'instant futur ou ultérieurement.

Le procédé comporte une étape E43 de correction du modèle M' en un modèle corrigé M, à l'aide de ce jeu de données postérieur D_{T+1}. On notera que l'étape de correction E43 peut être semblable à l'étape E2, en sélectionnant le modèle M parmi une pluralité de modèles générés par des algorithmes d'apprentissage automatique distincts, à partir du modèle M', qui minimise l'erreur de prédiction entre les données qu'il prédit et le jeu de données postérieur D_{T+1}.

Lors de l'itération suivante de l'étape de prédiction E4, le modèle corrigé M issu de l'étape de correction E43 de l'itération précédente ainsi que le jeu de données postérieur D_{T+1} sont alors utilisé pour prédire le modèle M' suivant.

Dans l'exemple de la [Fig.5], la loi de commande LC définit deux valeurs de consignes binaires, dans la mesure où l'éclairage public de la zone géographique considérée est un éclairage de type lampe à décharge, dont l'intensité lumineuse peut être difficilement contrôlée.

On a représenté en [Fig. 6] un autre exemple de loi de commande LC2, adaptée pour un éclairage public de type diode électroluminescente, dont l'intensité lumineuse peut être facilement contrôlée.

On constate ainsi que pendant les deuxième et troisième périodes T2, du fait de la diminution progressive du nombre de personnes se déplaçant dans la zone géographique ZG selon le modèle M', et de la diminution progressive de la luminosité ambiante, la consigne de flux lumineux croit progressivement d'une valeur nulle à une valeur de 100% du flux nominal.

Pendant la deuxième période T3, cette consigne décroit puis croit, en fonction du nombre de personnes se déplaçant dans la zone géographique ZG selon le modèle M.

Enfin, pendant la troisième période T3, cette consigne décroit depuis une valeur de 100% du flux nominal vers une valeur nulle.

La description qui précède explique clairement comment l'invention permet d'atteindre les objectifs qu'elle s'est fixée, et notamment en proposant un procédé modélisant un flux de population dans une zone géographique grâce à des données obtenues à partir de terminaux mobiles de personnes présentes dans une zone d'estimation et définissant une loi de commande d'un éclairage public à partir de ce modèle de flux de population. La loi de commande est ainsi adaptée aux habitudes de déplacement de la population dans cette zone géographique.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra prévoir de fournir d'autres indicateurs afin de générer le modèle de flux de population que ceux qui ont été décrits, et notamment un indicateur du nombre de personnes résidents dans la zone d'estimation ou un indicateur du temps passé dans la zone d'estimation. On pourra également prévoir d'autres algorithmes d'apprentissage automatique que ceux décrits.

## Revendications

1. Procédé (1) de contrôle d'un éclairage public dans une zone géographique prédéterminée (ZG), le procédé comportant les étapes suivantes :
• (E11) Fourniture d'un jeu de données (D) relatif à la présence de personnes dans une zone géographique d'estimation (ZE), obtenues à partir de terminaux mobiles de ces personnes ;
• (E2) Détermination d'au moins un modèle (M) de flux de population dans ladite zone géographique prédéterminée à partir dudit jeu de données ;
• (E5) Définition d'une loi de commande (LC) de l'éclairage public de ladite zone géographique en fonction dudit modèle de flux de population et (E6) application de ladite loi de commande à cet éclairage public ;
**caractérisé en ce que** l'étape de détermination (E2) du modèle (M) comporte une sous-étape de génération (E21) d'une pluralité de modèles de flux de population (M₁, M₂, M_{N}) dans ladite zone géographique prédéterminée (ZG), dits modèles de test, chaque modèle de test étant généré par un algorithme d'apprentissage automatique distinct à partir dudit jeu de données (D), chaque modèle de test étant associé à une métrique d'évaluation, et une sous-étape de sélection (E22) d'un modèle (M) de flux de population parmi la pluralité de modèles de test en fonction des métriques d'évaluation de ladite pluralité de modèles de test.

2. Procédé (1) selon la revendication précédente, dans lequel le jeu de données (D) fourni comporte une estimation (I1, 12, I3) du nombre de personnes entrant, présentes et sortant dans la zone d'estimation (ZE), pendant une pluralité d'intervalles de temps élémentaires d'un intervalle de temps global donné.

3. Procédé (1) selon la revendication précédente, dans lequel ladite estimation (11, 12, I3) du nombre de personnes entrant, présentes et sortant de la zone d'estimation (ZE) est obtenue à partir d'informations relatives à la position au cours du temps d'une pluralité de terminaux mobiles, ces informations étant déterminées à partir de données générées par des antennes relais (2) d'un réseau de téléphonie mobile situées dans la zone d'estimation, à laquelle ou auxquelles ces terminaux mobiles se sont connectés à un instant donné.

4. Procédé (1) selon l'une des revendications précédentes, **caractérisé en ce qu'**il comporte une étape de fourniture (E12) d'au moins un jeu supplémentaire de données contextuelles (D_{G}) relatives à ladite zone géographique prédéterminée (ZG), et dans lequel le modèle (M) de flux de population dans ladite zone géographique prédéterminée est déterminé à partir dudit jeu de données (D) et du jeu supplémentaire de données.

5. Procédé (1) selon l'une des revendications précédentes, **caractérisé en ce qu'**il comporte une étape de classification des données du jeu de données (D) parmi des catégories de données chacune associée à une sous-zone géographique, et dans lequel l'étape de détermination (E2) du modèle (M) comporte, pour chaque sous-zone géographique, une sous-étape de détermination d'un sous-modèle de flux de population dans cette sous-zone géographique à partir des données classifiées dans la catégorie de données associée à cette sous-zone géographique.

6. Procédé (1) selon l'une des revendications précédentes, **caractérisé en ce qu'**il comporte une étape de fourniture (E41) d'un jeu de données antérieur (D_{T}) relatif à la présence de personnes dans la zone géographique d'estimation (ZE) à un instant donné, une étape de prédiction (E4) d'un modèle (M') du flux de population à un instant futur par rapport à l'instant donné à partir du modèle de flux de population (M) déterminé lors de l'étape de détermination (E2) et du jeu de données antérieur, la loi de commande (LC) étant définie à partir du modèle de flux de population prédit.

7. Procédé (1) selon la revendication précédente, le procédé comportant une étape de fourniture d'au moins une information relative à un état futur de ladite zone géographique prédéterminée (ZG) audit instant futur, l'étape de prédiction (E4) d'un modèle du flux de population (M') à un instant futur étant réalisée à partir du modèle de flux de population (M) déterminé lors de l'étape de détermination (E2), du jeu de données antérieur (D_{T}) et de ladite information relative à l'état futur de ladite zone géographique prédéterminée.

8. Procédé (1) selon l'une des revendications 6 ou 7, le procédé comportant une étape de fourniture (E42) d'un jeu de données postérieur (D_{T+1}) relatif à la présence de personnes dans la zone géographique d'estimation (ZE) audit instant futur, cette étape étant réalisée à l'instant futur ou ultérieurement à cet instant futur, **caractérisé en ce qu'**il comporte une étape de correction (E43) dudit modèle de flux de population prédit (M') à l'aide dudit jeu de données postérieur.

9. Procédé (1) selon l'une des revendications précédentes, dans lequel l'étape de définition d'une loi de commande (LC) de l'éclairage public de ladite zone géographique (ZG) comporte la définition d'au moins une période d'extinction et/ou de diminution et/ou d'allumage et/ou d'augmentation (T1, T2, T3) de l'éclairage public en fonction dudit modèle de flux de population (M).

10. Procédé (1) selon la revendication précédente, le procédé comportant une étape de fourniture (E51) d'une consigne de consommation d'énergie globale (C), dans lequel les périodes d'extinction, de diminution, d'allumage et/ou d'augmentation de l'éclairage public (T1, T2, T3) sont définies en fonction du modèle de flux de population (M) et de sorte que la consommation d'énergie de l'éclairage public pendant la totalité de ces périodes soit conforme à ladite consigne.

11. Procédé (1) selon l'une des revendications 9 à 10, dans lequel le procédé comporte une étape de fourniture (E52) d'une information relative à la luminosité ambiante (IL) de la zone géographique prédéterminée (ZG), dans lequel les périodes d'extinction, de diminution, d'allumage et/ou d'augmentation de l'éclairage public (T1, T2, T3) sont définies en fonction du modèle de flux de population (M) et de cette information de luminosité ambiante.

## Patentansprüche

1. Verfahren (1) für eine Steuerung öffentlicher Beleuchtung in einem vorbestimmten geografischen Gebiet (ZG), das Verfahren umfassend die folgenden Schritte:
• (E11) Bereitstellen eines Datensatzes (D) bezogen auf die Anwesenheit von Personen in einem geografischen Schätzgebiet (ZE), der von mobilen Endgeräten dieser Personen erhalten wird;
• (E2) Bestimmen von mindestens einem Modell (M) eines Bevölkerungsstroms in dem vorbestimmten geografischen Gebiet aus dem Datensatz;
• (E5) Definieren eines Regelungsgesetzes (LC) für die öffentliche Beleuchtung in dem geografischen Gebiet in Abhängigkeit von dem Bevölkerungsstrommodell und (E6) Anwenden des Regelungsgesetzes auf diese öffentliche Beleuchtung;
**dadurch gekennzeichnet, dass** der Schritt des Bestimmens (E2) des Modells (M) einen Unterschritt eines Erzeugens (E21) einer Vielzahl von Bevölkerungsstrommodellen (M₁, M₂, M_{N}) in dem vorbestimmten geografischen Gebiet (ZG), die als Testmodelle bezeichnet werden, wobei jedes Testmodell durch einen separaten Maschinenlernalgorithmus aus dem Datensatz (D) erzeugt wird, wobei jedem Testmodell eine Bewertungsmetrik zugeordnet ist, und einen Unterschritt (E22) eines Auswählens eines Bevölkerungsstrommodells (M) unter der Vielzahl von Testmodellen in Abhängigkeit von den Bewertungsmetriken der Vielzahl von Testmodellen umfasst.

2. Verfahren (1) nach dem vorstehenden Anspruch, wobei der bereitgestellte Datensatz (D) eine Schätzung (I1, I2, I3) der Anzahl der Personen umfasst, die während einer Vielzahl von Elementarzeitintervallen eines gegebenen Gesamtzeitintervalls das Schätzgebiet (ZE) betreten, sich dort aufhalten und es verlassen.

3. Verfahren (1) nach dem vorstehenden Anspruch, wobei das Schätzen (I1, I2, I3) der Anzahl der Personen, die das Schätzgebiet (ZE) betreten, sich dort aufhalten und es verlassen, aus Informationen bezüglich der zeitlichen Position einer Vielzahl von mobilen Endgeräten erhalten wird, wobei diese Informationen aus Daten bestimmt werden, die durch Relaisantennen (2) eines in dem Schätzgebiet gelegenen Mobilfunknetzes erzeugt werden, mit dem oder denen diese mobilen Endgeräte sich zu einem gegebenen Zeitpunkt verbunden haben.

4. Verfahren (1) nach einem der vorstehenden Ansprüche,
**dadurch gekennzeichnet, dass** es einen Schritt des Bereitstellens (E12) von mindestens einem zusätzlichen Kontextdatensatz (D_{G}) bezogen auf das vorbestimmte geografische Gebiet (ZG) umfasst, und wobei das Bevölkerungsstrommodell (M) in dem vorbestimmten geografischen Gebiet aus dem Datensatz (D) und dem zusätzlichen Datensatz bestimmt wird.

5. Verfahren (1) nach einem der vorstehenden Ansprüche,
**dadurch gekennzeichnet, dass** es einen Schritt eines Klassifizierens der Daten des Datensatzes (D) unter Datenkategorien, die jeweils einem geografischen Untergebiet zugeordnet sind, umfasst, und wobei der Schritt des Bestimmens (E2) des Modells (M) für jedes geografische Untergebiet einen Unterschritt des Bestimmens eines Bevölkerungsstromuntermodells in diesem geografischen Untergebiet aus den Daten umfasst, die in der Datenkategorie klassifiziert sind, die diesem geografischen Untergebiet zugeordnet ist.

6. Verfahren (1) nach einem der vorstehenden Ansprüche,
**dadurch gekennzeichnet, dass** es einen Schritt des Bereitstellens (E41) eines vorherigen Datensatzes (D_{T}) bezogen auf die Anwesenheit von Personen in dem geografischen Schätzbereich (ZE) zu einem gegebenen Zeitpunkt, einen Schritt (E4) des Vorhersagens eines Bevölkerungsstrommodells (M') zu einem zukünftigen Zeitpunkt relativ zu dem gegebenen Zeitpunkt aus dem während des Bestimmungsschritts (E2) bestimmten Bevölkerungsstrommodell (M) und dem vorherigen Datensatz umfasst, wobei das Regelungsgesetz (LC) aus dem vorhergesagten Bevölkerungsstrommodell definiert wird.

7. Verfahren (1) nach dem vorstehenden Anspruch, wobei das Verfahren einen Schritt des Bereitstellens von mindestens einer Information bezogen auf einen zukünftigen Zustand des vorbestimmten geografischen Gebiets (ZG) zu dem zukünftigen Zeitpunkt umfasst, wobei der Schritt des Vorhersagens (E4) eines Bevölkerungsstrommodells (M') zu einem zukünftigen Zeitpunkt aus dem während des Bestimmungsschritts (E2) bestimmten Bevölkerungsstrommodell (M), dem vorherigen Datensatz (D_{T}) und den Informationen bezogen auf den zukünftigen Zustand des vorbestimmten geografischen Gebiets durchgeführt wird.

8. Verfahren (1) nach einem der Ansprüche 6 oder 7, das Verfahren umfassend einen Schritt des Bereitstellens (E42) eines nachfolgenden Datensatzes (D_{T+1}) bezogen auf die Anwesenheit von Personen in dem geografischen Schätzgebiet (ZE) zu dem zukünftigen Zeitpunkt, wobei dieser Schritt zu dem zukünftigen Zeitpunkt oder anschließend an diesen zukünftigen Zeitpunkt durchgeführt wird, **dadurch gekennzeichnet, dass** es einen Schritt (E43) des Korrigierens des vorhergesagten Bevölkerungsstrommodells (M') mittels des folgenden Datensatzes umfasst.

9. Verfahren (1) nach einem der vorstehenden Ansprüche, wobei der Schritt des Definierens eines Regelungsgesetzes (LC) für die öffentliche Beleuchtung des geografischen Gebiets (ZG) das Definieren von mindestens einem Zeitraum (T1, T2, T3) des Ausschaltens und/oder Reduzierens und/oder Einschaltens und/oder Erhöhens der öffentlichen Beleuchtung in Abhängigkeit von dem Bevölkerungsstrommodell (M) umfasst.

10. Verfahren (1) nach dem vorstehenden Anspruch, wobei das Verfahren einen Schritt des Bereitstellens (E51) einer Anweisung (C) zum Gesamtenergieverbrauch umfasst, in der die Zeiträume (T1, T2, T3) des Ausschaltens, Reduzierens, Einschaltens und/oder Erhöhens der öffentlichen Beleuchtung in Abhängigkeit von dem Bevölkerungsstrommodell (M) und so definiert werden, dass der Energieverbrauch der öffentlichen Beleuchtung während aller dieser Zeiträume dieser Anweisung entspricht.

11. Verfahren (1) nach einem der Ansprüche 9 bis 10, wobei das Verfahren einen Schritt des Bereitstellens (E52) von Informationen bezogen auf die Umgebungslichtstärke (IL) des vorbestimmten geografischen Gebiets (ZG) umfasst, wobei die Zeiträume des Ausschaltens, Reduzierens, Einschaltens und/oder Erhöhens der öffentlichen Beleuchtung (T1, T2, T3) in Abhängigkeit von dem Bevölkerungsstrommodell (M) und diesen Umgebungslichtstärkeinformationen definiert werden.

## Claims

1. Method (1) for controlling street lighting in a predetermined geographical zone (ZG), the method comprising the following steps:
• (E11) Providing a set of data (D) relating to the presence of people in an estimation geographical zone (ZE), obtained from mobile devices of these people;
• (E2) Determining at least one model (M) of population flow in said predetermined geographical zone from said set of data;
• (E5) Defining a control law (LC) for the street lighting of said geographical zone on the basis of said population flow model and (E6) applying said control law to this street lighting;
**characterized in that** the step (E2) of determining the model (M) comprises a sub-step (E21) of generating a plurality of models (M₁, M₂, M_{N}) of population flow in said predetermined geographical zone (ZG), so-called test models, each test model being generated by a distinct machine learning algorithm from said set of data (D), each test model being associated with an evaluation metric, and a sub-step (E22) of selecting a population flow model (M) from the plurality of test models on the basis of the evaluation metrics of said plurality of test models.

2. Method (1) according to the preceding claim, wherein the provided set of data (D) comprises an estimate (I1, I2, I3) of the number of people entering, present in and leaving the estimation zone (ZE), during a plurality of elementary time intervals of a given overall time interval.

3. Method (1) according to the preceding claim, wherein said estimate (I1, I2, I3) of the number of people entering, present in and leaving the estimation zone (ZE) is obtained from information relating to the position over time of a plurality of mobile devices, this information being determined from data generated by relay antennas (2) of a mobile telephony network located in the estimation zone, to which these mobile devices have connected at a given instant.

4. Method (1) according to any of the preceding claims, **characterized in that** it comprises a step (E12) of providing at least one additional set of contextual data (D_{G}) relating to said predetermined geographical zone (ZG), and wherein the model (M) of population flow in said predetermined geographical zone is determined from said set of data (D) and the additional set of data.

5. Method (1) according to any of the preceding claims, **characterized in that** it comprises a step of classifying the data of the set of data (D) among data categories each associated with a geographical sub-zone, and wherein the step (E2) of determining the model (M) comprises, for each geographical sub-zone, a sub-step of determining a sub-model of population flow in this geographical sub-zone from the data classified in the data category associated with this geographical sub-zone.

6. Method (1) according to any of the preceding claims, **characterized in that** it comprises a step (E41) of providing a prior set of data (D_{T}) relating to the presence of people in the estimation geographical zone (ZE) at a given instant, a step (E4) of predicting a model (M') of the population flow at a future instant relative to the given instant from the population flow model (M) determined during the determination step (E2) and from the prior set of data, the control law (LC) being defined on the basis of the predicted population flow model.

7. Method (1) according to the preceding claim, the method comprising a step of providing at least one piece of information relating to a future state of said predetermined geographical zone (ZG) at said future instant, the step (E4) of predicting a model (M') of the population flow at a future instant being carried out on the basis of the model (M) of the population flow determined during the determination step (E2), the prior set of data (D_{T}) and said piece of information relating to the future state of said predetermined geographical zone.

8. Method (1) according to either of claims 6 or 7, the method comprising a step (E42) of providing a later set of data (D_{T+1}) relating to the presence of people in the estimation geographical zone (ZE) at said future instant, this step being carried out at the future instant or subsequently to this future instant, **characterized in that** it comprises a step (E43) of correcting said predicted population flow model (M') using said later set of data.

9. Method (1) according to any of the preceding claims, wherein the step of defining a control law (LC) for the street lighting of said geographical zone (ZG) comprises defining at least one period of switching off and/or reducing and/or switching on and/or increasing (T1, T2, T3) the street lighting on the basis of said population flow model (M).

10. Method (1) according to the preceding claim, the method comprising a step (E51) of providing an overall energy consumption setpoint (C), wherein the periods for switching off, reducing, switching on and/or increasing the street lighting (T1, T2, T3) are defined on the basis of the population flow model (M) and such that the energy consumption of the street lighting during all of these periods conforms to said setpoint.

11. Method (1) according to either of claims 9 to 10, wherein the method comprises a step (E52) of providing information relating to the ambient brightness (IL) of the predetermined geographical zone (ZG), wherein the periods for switching off, reducing, switching on and/or increasing the street lighting (T1, T2, T3) are defined on the basis of the population flow model (M) and this ambient brightness information.
